# EUROPÄISCHE PATENTANMELDUNG

(11) **EP 2 360 353 A2**
(43) Veröffentlichungstag der Anmeldung: **24.08.2011**
(21) Anmeldenummer: 10184263.1
(22) Anmeldetag: 30.09.2010
(51) Int. Cl.: F01K 3/10, F01K 13/02, F01K 15/02

(54) **System und Verfahren zur Steuerung miteinander gekoppelter Energieerzeugungs-, Speicher- und/oder Verbrauchseinheiten**

(30) Priorität: 01.10.2009 DE 102009044161
(71) Anmelder: Grönniger, Stefan, 93059 Regensburg (DE)
(72) Erfinder: Grönniger, Stefan, 93059 Regensburg (DE)
(74) Vertreter: Benninger, Johannes

(57) **Zusammenfassung**

Die Erfindung betrifft ein Verfahren zur gemeinsamen und/oder aufeinander abgestimmten Steuerung miteinander gekoppelter Energieerzeugungs-, Speicher- und/oder Verbrauchseinheiten. Bei dem Verfahren sind wenigstens eine Energieerzeugungseinheit mit wenigstens einer Verbrauchseinheit derart gekoppelt, dass die von dieser benötigte Energie mittels eines Regel- und/oder Prognosealgorithmus zumindest näherungsweise auf Grundlage eines Verbrauchsprofils in der Vergangenheit über den Zeitverlauf und/oder auf Grundlage weiterer Parameter wie z.B. Wetterdaten in der Vergangenheit, Gegenwart oder Zukunft abgeschätzt und von der Energieerzeugungseinheit zur Verfügung gestellt wird. Gleichzeitig wird eine Versorgung mit Strom, Wärme und/oder Kälte mit einem Minimum an insgesamt zugeführter Energie und unter Berücksichtigung von Nutzervorgaben sichergestellt.

## Beschreibung

Die Erfindung betrifft ein System sowie ein Verfahren zur Steuerung miteinander gekoppelter Energieerzeugungs-, Speicher- und/oder Verbrauchseinheiten mit den Merkmalen der unabhängigen Patentansprüche 1 bzw. 12.

Private Haushalte und wirtschaftliche Einheiten benötigen unterschiedliche Arten von Energie, in erster Linie Wärmeenergie und elektrische Energie. Die elektrische Energie wird üblicherweise über ein öffentliches Leitungsnetz geliefert und von einem Energieversorgungsunternehmen bereit gestellt, während es für die Wärmeversorgung zahlreiche unterschiedliche Möglichkeiten der Lieferung, Erzeugung und/oder Nutzung gibt. Eine zunehmend eingesetzte Variante zur Wärmeversorgung von größeren Wirtschaftseinheiten, jedoch auch von Privathaushalten besteht in der Verwendung eines Blockheizkraftwerks, das neben Wärme auch elektrische Energie liefern kann, die wahlweise selbst verbraucht oder in ein öffentliches Leitungsnetz eingespeist werden kann. Darüber hinaus können weitere Energieerzeuger zum Einsatz kommen, bspw. Fotovoltaikelemente zur Wandlung von solarer Strahlungsenergie in elektrischen Strom oder Solarkollektoren zur Wärmeerzeugung. Werden mehrere Energiequellen eingesetzt, ist deren Einsatz sinnvoll aufeinander abzustimmen, um einen möglichst effizienten und Kosten sparenden Einsatz zu ermöglichen.

Die DE 10 2005 036 703 A1 beschreibt ein System zur Bereitstellung von Warmwasser und Heizenergie, zur Kühlung, Klimatisierung und gleichzeitiger mechanischer Leistungs- bzw. Stromerzeugung mittels einer thermischen Solaranlage und/oder Abwärmenutzung für den stationären oder mobilen Einsatz.

Aus der DE 296 05 939 U1 ist ein System zur Prognose, Einsatzplanung und Komponentenoptimierung bei der Energieerzeugung bekannt, bei dem elektrischer und/oder thermischer Bezug oder Brennstoffbezug einerseits sowie Bereitstellung, Management oder Planung von elektrischer und thermischer Energie andererseits nach aktuellem Lastgang erfolgt. Hierbei soll der minimale Brennstoffeinsatz bei jeweils bestem Gesamtwirkungsgrad ermittelt werden.

Die Vernetzung einer Vielzahl von Energieverbrauchern und verschiedenen Energieerzeugungseinheiten unter der Randbedingung eines optimalen Versorgungszustandes, eines geringen Brennstoffeinsatzes und eines optimierten Gesamtwirkungsgrades ist eine komplexe Steuerungsaufgabe, die jedoch zusätzlich erschwert werden kann, wenn weitere Randbedingungen zu berücksichtigen sind, bspw. die Zwischenspeicherung von Wärmeenergie oder elektrischer Energie.

Ein Ziel der vorliegenden Erfindung besteht darin, ein System miteinander gekoppelter Verbraucher und Energieerzeuger möglichst effizient betreiben zu können, wobei bedarfsgerechte Steuerungseingriffe ermöglicht sein sollen.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Der unabhängige Verfahrensanspruch definiert ein Steuerungs- und/oder Betriebsverfahren zur Erreichung des oben skizzierten Ziels der Erfindung. Das erfindungsgemäße Verfahren dient zur gemeinsamen und/oder zur aufeinander abgestimmten Steuerung miteinander gekoppelter Energieerzeugungs-, Speicher- und/oder Verbrauchseinheiten. Hierbei ist die wenigstens eine Energieerzeugungseinheit mit wenigstens einer Verbrauchseinheit derart gekoppelt, dass die von dieser benötigte Energie mittels eines Prognosealgorithmus zumindest näherungsweise auf Grundlage eines Verbrauchsprofils in der Vergangenheit über den Zeitverlauf abgeschätzt und von der Energieerzeugungseinheit zur Verfügung gestellt wird. Ein wichtiger Aspekt der vorliegenden Erfindung besteht darin, dass gleichzeitig eine Versorgung mit Strom, Wärme und/oder Kälte mit einem Minimum an insgesamt zugeführter Energie und unter Berücksichtigung von Nutzervorgaben sichergestellt wird. Mit der Erfindung wird eine autarke oder zumindest teilweise autarke Versorgung mit Energie sichergestellt, und zwar unter Zufuhr einer minimierten Gesamtenergie. Mit zugeführter Energie ist in diesem Zusammenhang insbesondere Windenergie, Sonnenenergie, Biogas oder dgl. regenerative Energiequellen gemeint.

Grundsätzlich soll das mit den unabhängigen Ansprüchen definierte System und Verfahren dazu dienen, Energieerzeugungseinheiten und Verbraucher in Haushalten und/oder gewerblichen Wirtschaftseinheiten zu steuern und zu regeln sowie auch zu überwachen, um gleichzeitig die Versorgungssicherheit und einen möglichst hohen Anteil an selbst erzeugter Energie sicherstellen zu können. Die Vorteile des erfindungsgemäßen Verfahrens und des Systems liegen insbesondere in den geringen Betriebskosten und der reduzierten Emission von Schadstoffen wie bspw. dem klimaschädlichen Kohlendioxid, das von den Energieerzeugern oder auch von den Verbrauchern emittiert wird. In erster Linie werden in Haushalten und gewerblichen Wirtschaftseinheiten elektrischer Strom, Wärme und Kälte benötigt. Diese unterschiedlichen Energiearten werden aus Primärenergie wie bspw. solarer Strahlungsenergie (Sonnenenergie), aus Wind, Wasserenergie, Biomasse, Erdwärme oder aus fossilen Energieträgern vor Ort erzeugt und bereitgestellt. Kennzeichnend für das erfindungsgemäße Verfahren und System ist dabei die möglichst umfassende Eigenversorgung, so dass ein möglichst geringer Anteil von elektrischer Energie, Wärme oder Kälte aus externen Quellen bezogen und damit letztlich zugekauft werden muss.

Die vorliegende Erfindung betrifft gemäß einer weiteren Ausführungsvariante ein System und ein Verfahren zur gemeinsamen und/oder aufeinander abgestimmten Steuerung miteinander gekoppelter Energieerzeugungs-, Speicher- und/oder Verbrauchseinheiten in Haushalten und/oder gewerblichen Wirtschaftseinheiten, bei dem wenigstens eine Energieerzeugungseinheit mit wenigstens einer Verbrauchseinheit und/oder wenigstens einer Speichereinheit derart gekoppelt ist, dass die von den Verbrauchseinheiten benötigte Energie mittels eines Regel- und/oder Prognosealgorithmus zumindest näherungsweise auf Grundlage eines Verbrauchsprofils in der Vergangenheit über den Zeitverlauf abgeschätzt und von der Energieerzeugungseinheit und/oder der Speichereinheit zur Verfügung gestellt wird. Das System bzw. das Verfahren ist insbesondere dadurch gekennzeichnet, dass alle Erzeuger, Verbraucher, Speicher über eine zentrale Steuereinheit gekoppelt sind, welche dafür vorgesehen ist, relevante Betriebsparameter zu erfassen, zu verarbeiten und aufzubereiten, zu speichern und/oder an eine Anzeige- und/oder Ein- bzw. Ausgabeeinheit zu liefern, wobei ein aktueller Strom-, Wärme- und/oder Kältebedarf erfasst und über die zentrale Steuereinheit verarbeitet wird.

Das erfindungsgemäße Verfahren bzw. das erfindungsgemäße System hat u.a. den besonderen Vorteil, dass es eine gemeinsame und/oder aufeinander abgestimmte Steuerung miteinander gekoppelter Energieerzeugungs-, Speicher- und/oder Verbrauchseinheiten in Haushalten und/oder gewerblichen Wirtschaftseinheiten ermöglicht. Das System bzw. das Verfahren ermöglicht vorteilhaft die Selbstversorgung von Haushalten und/oder gewerblichen Wirtschaftseinheiten, wobei gleichzeitig die erzeugte und verbrauchte elektrische Energie sowie auch die Bereitstellung und der Verbrauch von Wärme und/oder Kälte berücksichtigt wird. Es wird vorgeschlagen, ein umfassendes Energiemanagementsystem für Strom, Kälte und Wärme zu installieren, das sich nicht nur für einen Netzverbund eignet, sondern insbesondere auch für einen sog. Inselbetrieb, bei der eine autarke Energieversorgung durch kleine Erzeugungs- und Speichereinheiten und eine variable Energienutzung im unmittelbaren Umfeld eines Haushalts bzw. mehrerer zusammengefasster Haushalte oder bspw. einer gewerblichen Wirtschaftseinheit im Vordergrund steht. Das Verfahren liefert eine vorteilhafte Möglichkeit einer umfassenden und sehr variablen Energieversorgung, so dass überwiegend die benötigte elektrische Energie, Wärme und/oder Kälte aus lokalen Quellen (z.B. Wind, Sonne) gewonnen werden kann und ggf. auf den Kauf von Energie (z.B. Strom) bzw. Energieträgern (z.B. Biogas) verzichtet werden kann.

Die zentrale Steuereinheit sorgt für die optimale Koordination der unterschiedlichen und in kurzer zeitlicher Abfolge wechselnden Angebots- und Bedarfssituationen der unterschiedlichen Energiearten. Auf der Grundlage von aus der Vergangenheit bekannten und vorzugsweise permanent aktualisierten Verbrauchsprofilen kann mit relativ hoher Prognosegenauigkeit der zu erwartende Energiebedarf geplant und zeit- und bedarfsgerecht zur Verfügung gestellt werden, ohne dass hierzu in nennenswertem Umfang auf externe Angebote zurückgegriffen werden muss.

Das erfindungsgemäße Verfahren eignet sich deshalb besonders gut zur Selbstversorgung von Haushalten und Gewerbeeinheiten, da es die Erzeugung von elektrischer Energie, von Wärme und Kälte in einem optimalen energieeffizienten Verhältnis zueinander steuern kann. Die Angebots- und Bedarfssituationen sind kundenindividuell unterschiedlich, da keine Einheit bzw. Immobilie im Zusammenhang mit dem jeweiligen Nutzerverhalten identisch einzustufen ist; zudem sind die Systeme in der Regel individuell aufgebaut und abgestimmt, da bspw. unterschiedliche Stromerzeuger zum Einsatz kommen können. Weiterhin können von den Kunden individuelle Vorgaben gemacht werden, so dass von einer optimierten Energieeffizienz abgewichen werden kann.

Weiterhin kann es von Vorteil sein, eine zu bestimmten Zeitpunkten benötigte und nicht von der Energieerzeugungseinheit zur Verfügung stellbare Mehrkapazität von einer mit den Einheiten gekoppelten Speichereinheit zu beziehen, die eine Pufferkapazität zur Verfügung stellt. Diese Speichereinheit kann wahlweise ein stationärer, fest mit den übrigen Einheiten gekoppelter Speicher oder bei einer besonders vorteilhaften Ausführungsvariante ein mobiler Speicher sein. Bei einer solchen Konfiguration kann die Speichereinheit oder zumindest eine von mehreren Speichereinheiten bspw. durch eine Akkumulatoreinheit eines temporär mit der Energieerzeugungseinheit gekoppeltes, elektrisch betriebenes Kraftfahrzeug gebildet werden. So bietet das erfindungsgemäße System und Verfahren den besonderen Vorteil, dass Elektrofahrzeuge in das Konzept integriert werden können und auf diese Weise die Kosten zur Aufladung dieser Fahrzeuge erheblich gesenkt werden können. Von Vorteil ist darüber hinaus, dass auch die Batterie des Elektrofahrzeugs als Energiezwischenspeicher eingesetzt werden können, um auf diese Weise Strombedarfsspitzen im Haushalt oder in der Wirtschaftseinheit decken zu können, ohne dass zusätzliche Energie aus dem öffentlichen Leitungsnetz bezogen werden muss. Eine geeignete Steuerung des Systems kann in diesem Zusammenhang sicherstellen, dass eine ausreichende Mindestmenge an gespeicherter Energie gewährleistet wird, um die Einsatzfähigkeit des Elektrofahrzeugs zu jedem Zeitpunkt aufrecht zu erhalten.

Wenn im vorliegenden Zusammenhang von Haushalten, Wirtschafteinheiten o. dgl. die Rede ist, so sind damit nicht zwingend physisch abgeschlossene Einheiten gemeint. Ebenso kann eine solche Einheit auch ein Verbund mehrerer Haushalte, eine größere Betriebsstätte wie bspw. eine Fabrik oder auch ganze Ortsteile oder Stadtteile eine Einheit gekoppelter Energieverbraucher, Energieerzeuger und Energiespeichereinheiten bilden, die sich für die Anwendung des erfindungsgemäßen Verfahrens eignen können.

Grundsätzlich besteht neben der erwähnten Möglichkeit, elektrisch betriebene Fahrzeuge in das Energiemanagement mit einzubeziehen, insbesondere als Energiepuffer für die elektrische Energie mit einer gezielten Ladung und/oder Entladung der mobilen Batterien, auch die Möglichkeit, das Fahrzeug über das Energiemanagement zu kühlen und/oder zu heizen. Wahlweise kann das erfindungsgemäße Energiemanagementsystem (womit auch das erfindungsgemäße Verfahren gemeint ist) über eine geeignete Schnittstelle (z.B. Bluetooth, Netzwerkkabel, WLAN etc.) mit dem Fahrzeug verbunden werden, so dass auch nahezu beliebige andere Daten übertragen werden können. Dies können bspw. Musikdaten, Videodaten oder sonstige Informationen sein, die dem Fahrzeugführer und/oder den Insassen zur Verfügung gestellt werden können. Ermöglicht es der Fahrzeughersteller und/oder -ausstatter bzw. -nachrüster bspw., dem Kunden seine Anzeige- und/oder Bedien- bzw. Eingabegeräte selbst zu konfigurieren, so sollte dies entsprechend der vorliegenden Erfindung grundsätzlich auch mit dem bzw. über das Energiemanagementsystem möglich sein.

Der oben erwähnte Aspekt der Nutzung von Batterien als elektrische Energiespeichereinheiten, ob stationär oder mobil, lässt sich um weitere Aspekte ergänzen und/oder verfeinern. Grundsätzlich können elektrische Akkumulatoren aller Art mit dem erfindungsgemäßen Energiemanagementsystem ― im vorliegenden Zusammenhang auch als EMS bezeichnet ― gekoppelt werden. So können bspw. Batterien für Fahrzeuge wie z.B. Kraftfahrzeuge und Flurförderfahrzeuge oder stationäre Stromversorgung vom EMS aufgeladen und diesem bei Bedarf als ergänzende Energiequelle zur Verfügung gestellt werden. Dies senkt den Energiebedarf und die Kosten. Gleichzeitig kann durch entsprechend ausgelegte Ladezyklen die Batterielebensdauer verlängert werden und/oder die Batteriekapazität aufrechterhalten werden. Zu diesem Zweck wird die Batterie bzw. das Fahrzeug an das EMS angeschlossen. Das EMS erfasst den Batteriezustand eigenständig und zyklisch oder permanent und entscheidet anhand eines Algorithmus, welcher Ladezyklus notwendig bzw. aus Optimierungsgründen sinnvoll ist. Diese Beurteilung kann auch vom Benutzer vorgegeben bzw. zumindest beeinflusst werden, wenn beispielsweise die Batterie aufgefrischt werden soll, was gewöhnlich mehrere Stunden dauert.

Die zumindest temporär angeschlossenen Batterien können auch verwendet werden, um die Stromleistung des EMS zu erhöhen. Übersteigt z.B. der Energiebedarf die Leistung der an das EMS angeschlossenen Stromerzeuger und soll kein Strom von extern, d.h. fremd bezogen werden, so kann aus der Batterie oder den Batterien dieser Bedarf gedeckt werden (vorausgesetzt die Batteriekapazität(en) sind groß genug). Erst wenn die Leistung auch in diesem Fall nicht ausreicht, wird entweder Strom zugekauft oder einzelne oder mehrere Verbraucher ― abgestuft nach ihrer Wichtigkeit bzw. nach bestimmten Prioritätsbedingungen ― abgeschaltet. Vom Benutzer können individuell die Vorgaben für Stromkauf oder Leistungsreduzierung gemacht werden.

Wird das EMS im Verbund eines virtuellen Kraftwerks betrieben, kann auch aus den Batterien Leistung zur Verfügung gestellt werden. Ob und wie viel Strom an das virtuelle Kraftwerk geliefert wird, kann wahlweise vom Benutzer festgelegt und/oder vom EMS ermittelt werden.

Um sicherzustellen, dass bei Verwendung von Fahrzeugbatterien für mindestens den nächsten Fahrzyklus noch ausreichend Energie in der Batterie verbleibt, werden auch die Fahrzeugdaten in das EMS eingelesen und/oder durch den Benutzer vorgegeben. So kann der Batterielade- und -entladezyklus individuell vom EMS auf das Benutzerverhalten angepasst werden. In Abhängigkeit von den erhaltenen Daten entscheidet dann das EMS, welcher Ladezyklus für die Batterie unter den gegebenen Randbedingungen sinnvoll ist und gewählt wird.

Die Fahrzeugdaten werden entweder von der vom Fahrzeughersteller eingebauten Steuerung ausgelesen oder es wird eine zusätzliche autarke Steuerung vom EMS im Kundenfahrzeug eingebaut, um das Benutzerverhalten bei Fahrten mit dem Fahrzeug zu erhalten. Benötigt werden beispielsweise Dauer und Länge der letzten Fahrzyklen, ein durchschnittlicher, minimaler und maximaler Energieverbrauch sowie typische Standzeiten des Fahrzeugs.

Ist jede Batterie oder jedes Fahrzeug mit einer einmaligen Kennzeichnung (z.B. Barcode oder Seriennummer) ausgestattet und wird diese mit in das EMS eingelesen, speichert das EMS über einen konfigurierbaren Zeitraum die Daten der Batterie bzw. des Fahrzeugs. Dies ermöglicht die Auswertung über das Langzeitverhalten, die Verbesserung des Lade-/Entladealgorithmus und reduziert die Kosten für Reparatur und Wartung. In diesem Zusammenhang kann es weiterhin von Vorteil sein, wenn bestimmte oder alle Lade- und Entladezyklen für die wenigstens eine Akkumulatoreinheit unter Berücksichtigung eines aktuellen Ladezustandes und ggf. unter zusätzlicher Berücksichtigung einer vorgebbaren Rest- bzw. Mindestkapazität und/oder unter Berücksichtigung der Benutzergewohnheiten und/oder einer Optimierung der Lebensdauer der Akkumulatoren steuerbar bzw. vorgebbar sind.

Auch kann das EMS verwendet werden, um das Fahrzeug und andere angeschlossene Geräte und Maschinen zu überwachen. Zusätzlich kann das EMS die Werkstatt oder den Handwerker über fällige Wartungstermine und über den Zustand des Fahrzeugs und/oder des Gerätes etc. informieren. So können schon vor dem Wartungstermin Ersatzteile bestellt oder die zeitliche Dauer des Werkstattaufenhaltes bzw. der Wartung ermittelt und eingeplant werden. Dies erhöht die Kundenzufriedenheit, senkt Kosten und lastet die Werkstatt bzw. den Handwerker besser aus.

Selbstverständlich kann eine sinnvolle Ausführungsvariante vorsehen, dass eine zu bestimmten Zeitpunkten benötigte und nicht von der Energieerzeugungseinheit zur Verfügung stellbare Mehrkapazität von einem mit den Einheiten gekoppelten öffentlichen Leitungsnetz zur elektrischen Energieversorgung und/oder zur Wärmeenergieversorgung geliefert wird.

Die Prognosedaten zur Bildung des Prognosealgorithmus können bspw. aus Verbrauchsverläufen der Verbrauchseinheiten, aus Nutzungsverläufen des mit den Einheiten koppelbaren Fahrzeugs bzw. Kraftfahrzeugs (auch im Plural zu verstehen) sowie aus Wetterdaten und/oder anderen externen Parametern gebildet werden. Die Wetterdaten können zudem unterstützend zur Vorhersage und Planung von geschätzten und/oder zu erwartenden Verbrauchsverläufen der Verbrauchseinheiten verarbeitet werden.

Weiterhin kann vorgesehen sein, dass eine zu bestimmten Zeitpunkten von den Energieerzeugungseinheiten gelieferte und verfügbare und gleichzeitig nicht von den Verbrauchseinheiten benötigte und/oder nicht von der wenigstens einen Speichereinheit aufnehmbare elektrische Energie dem öffentlichen Leitungsnetz und/oder benachbarten Verbrauchseinheiten zur Verfügung gestellt wird. Auch kann eine zu bestimmten Zeitpunkten von den Energieerzeugungseinheiten gelieferte und verfügbare und gleichzeitig nicht von den Verbrauchseinheiten benötigte und/oder nicht von der wenigstens einen Speichereinheit aufnehmbare Wärmeenergie benachbarten Verbrauchseinheiten zur Verfügung gestellt werden. Generell schwankt der Energiebedarf in Haushalten und gewerblichen Wirtschaftseinheiten in Abhängigkeit von der Tageszeit wie auch im Jahresverlauf sowie der Aktivitäten der Bewohner bzw. der Geschäftstätigkeit. Zum Ausgleich von Bedarfssenken und Lastspitzen ist es deshalb besonders vorteilhaft, Pufferspeicher zu verwenden. Ist die Stromproduktion dagegen höher als der Strombedarf, so kann der überschüssige Strom in das öffentliche Netz eingespeist und die hierfür erhaltene Vergütung ggf. als Einnahme, als Gutschrift für eine zukünftige Stromlieferung oder auch auf andere Weise verbucht werden.

Die wenigstens eine Energieerzeugungseinheit kann vorteilhaft durch eine Kraft-Wärme-Koppelungseinheit (KWK-Einheit) gebildet sein, die elektrische Energie erzeugt und deren Abwärme zur Lieferung von Wärmeenergie genutzt wird. Als Energieerzeugungseinheit kann grundsätzlich auch eine Kraft-Wärme-(Kälte)-Koppelungseinheit (KWK(K)-Einheit) in Frage kommen. So kann die wenigstens eine Energieerzeugungseinheit beispielsweise durch ein Blockheizkraftwerk gebildet sein, das über einen Antriebsmotor verfügt, der mit einem Generator zur Erzeugung elektrischer Energie gekoppelt ist, und dessen Motorabwärme zur Lieferung von Wärmeenergie genutzt wird. Bei einer sinnvollen Steuerung kann das Blockheizkraftwerk vorzugsweise wärmegeführt betrieben werden, so dass weitgehend die gesamte von dem Blockheizkraftwerk gelieferte Wärmemenge dezentral verbraucht wird, während bei der Wärmeerzeugung gleichzeitig anfallende elektrische Energie wahlweise unmittelbar verbraucht, in einem der Speicher zwischengespeichert und/oder dem öffentlichen Leitungsnetz zur Verfügung gestellt wird. Generell ist es von Vorteil, die Steuerung so konfigurieren zu können, dass bestimmten Energieerzeugungseinheiten ein Vorrang eingeräumt wird. Sind im erfindungsgemäßen System bspw. Fotovoltaik- und/oder Thermosolaranlagen integriert oder wird das Blockheizkraftwerk bzw. die Kraft-Wärme-Koppelungseinheit (KWK-Einheit) mit Biomasse betrieben, so ist es vorteilhaft, die Steuerung so zu konfigurieren, dass die erneuerbaren Energieträger und/oder dezentralen Energieerzeuger bei der Versorgung Vorrang besitzen. Alternativ können bis zu 100% des mit erneuerbaren Energien erzeugten elektrischen Stroms in das private und/oder öffentliche Stromnetz eingespeist und damit anderen Verbrauchern nutzbar gemacht werden, wenn dies dem Kunden bspw. aufgrund der erzielbaren Einspeisevergütung attraktiv und damit ggf. sinnvoller erscheint. In diesem Zusammenhang können auch die regionalen Wetterdaten und Wetterprognosen zur Konfiguration und Steuerung des Systems herangezogen werden. Selbstverständlich ist es auch möglich und sinnvoll, die KWK-Einheit wärmegeführt und/oder in einer Kombination aus wärmegeführtem und stromgeführtem Modus zu betreiben. Eine weitere vorteilhafte Variante kann vorsehen, die KWK-Einheit bedarfs- und/oder situationsabhängig netzparallel oder in einem Inselbetrieb zu betreiben. So kann bspw. eine Unregelmäßigkeit oder ein Ausfall im öffentlichen oder lokalen Netz erkannt werden, was zu einer Auftrennung der elektrischen Verbindung führen kann, so dass die Energieerzeugereinheit bzw. die KWK-Einheit in einem sog. Inselbetrieb weiterlaufen kann. Hierbei werden nur die direkt gekoppelten Komponenten mit Wärme und/oder elektrischem Strom versorgt, während entfernt angekoppelte Verbraucher solange abgetrennt bleiben, bis eine reguläre Netzverbindung wieder zur Verfügung steht. In diesem Fall kann eine erneute Aufschaltung der KWK-Einheit erfolgen. Der Inselbetrieb lässt sich ggf. ― nach Erfüllung weiterer Randbedingungen ― zur Aufrechterhaltung einer Notstromversorgung nutzen.

Wird ein Blockheizkraftwerk als KWK-Energieerzeugungseinheit eingesetzt, so können als mechanische Antriebsquellen insbesondere Verbrennungsmotoren eingesetzt werden. Dies ist jedoch nicht einschränkend zu verstehen, da grundsätzlich auch andere Antriebsquellen als Verbrennungsmotoren eingesetzt werden können, die vom Erfindungsgedanken ebenfalls mit umfasst sein sollen. Beim Einsatz eines Blockheizkraftwerks als KWK-Energieerzeugungseinheit wird dies typischerweise so betrieben, dass es auf einen idealen Betriebspunkt abgestimmt ist, in dem der Wirkungsgrad des Erzeugers hinsichtlich der Stromerzeugung maximiert ist. Dies stellt üblicherweise die Wirtschaftlichkeit des Blockheizkraftwerks sicher.

Bei Betrieb einer KWK-Erzeugungseinheit kann es durch äußere Einflüsse zu einer Veränderung in der Strom- und Wärmenachfrage kommen. Stellt sich eine höhere Nachfrage nach Strom ein, kann mittels einer zusätzlichen Steuereinrichtung bei gleicher Zufuhr von Energie, z.B. Erdgas, der Wirkungsgrad der KWK-Energieerzeugungseinheit stufenlos weiter gesteigert werden. Gleichzeitig wird dabei weniger Wärme erzeugt. Wird umgekehrt mehr Wärme als Strom benötigt, kann durch Abschalten der zuvor genannten zusätzlichen Steuereinrichtung zunächst der Wärmewirkungsgrad auf das Ausgangsniveau gesteigert werden. Steigt weiterhin die Wärmenachfrage, kann mittels einer anderen Steuereinheit der Wärmewirkungsgrad und damit die Wärmeproduktion weiter gesteigert werden. Dies geht zu Lasten des Stromwirkungsgrades. In beiden Fällen bleibt der Gesamtwirkungsgrad der KWK-Energieerzeugungseinheit annähernd konstant.

Am Beispiel eines Verbrennungsmotors seien die Eingriffs- und Steuerungsmöglichkeiten nochmals verdeutlicht. Dem oben genannten idealen Betriebspunkt ist bei Verbrennungsmotoren ein relativ schmales Drehzahlband zugeordnet, woraus sich eine optimale Drehzahl ergibt, auf welche die sinnvollste Drehzahl des vom Verbrennungsmotor angetriebenen elektrischen Generators abzustimmen ist. Da der Generator zur Sicherstellung eines möglichst hohen Wirkungsgrades nach Möglichkeit in direkter Koppelung und ohne zwischengeschaltetes Getriebe mit dem Antriebsmotor gekoppelt ist, besteht ein unmittelbarer Zusammenhang zwischen dem idealen bzw. optimalen Betriebspunkt des Motors und der erzeugten Wechselspannungsfrequenz und der Drehzahl des Generators. Gleichzeitig resultiert aus einem solchermaßen definierten Betriebspunkt ein nicht variables, sondern annähernd festes Output-Verhältnis, d.h. ein Verhältnis aus generierter elektrischer Leistung und erzeugter Wärmeleistung.

Soll nun aus Gründen einer möglichst effizienten Versorgung von diesem starren Verhältnis abgewichen werden, bspw. um einen höheren Anteil an Wärmeenergie zu erzeugen, so lässt sich dies bei einem Verbrennungsmotor auf einfache Weise durch Verschiebung seines Betriebspunktes erreichen. Nach herkömmlichem Verständnis arbeitet ein Verbrennungsmotor umso effizienter, je größer der Anteil der pro Kraftstoffmenge erzielbaren mechanischen Wellenleistung und je geringer die meist als Nebenprodukt angesehene Verlustleistung ist, die über das Kühlsystem abgeführt wird. Im vorliegenden Einsatzfall ist die Verlustleistung jedoch kein Abfallprodukt, sondern steht in unmittelbarem Zusammenhang mit der zu erzielenden Wärmeleistung. Wird nun der Verbrennungsmotor bspw. durch veränderte Betriebsparameter aus seinem optimalen Betriebspunkt gefahren und dadurch das Strom-Wärmeverhältnis verändert wird, so bedeutet dies letztlich, dass die Verteilung zwischen mechanischer Wellenleistung und damit elektrischer Leistung und der abgegebenen Wärmeleistung zugunsten letzterer verschoben werden kann. Dieses Verhältnis lässt sich durch Steuerung des Verbrennungsmotors in gewünschter Weise variieren und modulieren, ohne dass eine wesentliche Veränderung im Gesamtwirkungsgrad der KWK-Erzeugungseinheit damit einhergeht.

Eine weitere Variante des Verfahrens kann vorsehen, dass von einem Inselbetrieb als bevorzugter Betriebsweise bei Auswertung definierbarer Randbedingungen wie einem Speichervorrat an gespeicherter elektrischer Energie, Wärme und/oder Kälte sowie ggf. unter Berücksichtigung eines Verbrauchsprofils in der Vergangenheit und/oder weiterer Parameter wie z.B. Wetterdaten in der Vergangenheit, Gegenwart oder Zukunft auf einen netzparallelen Betrieb umgeschaltet wird bzw. werden kann.

Zudem kann vorgesehen sein, dass die Auswertung des Systemzustandes (z.B. aktueller Verbrauch, zu erwartender Verbrauch, Füllstand der Speicher, d.h. aktuelle "Speichersituation" etc.) und/oder der Randbedingungen zur kurz- oder mittelfristigen Prognose verwendet wird/werden, um eine Entscheidung über die Betriebsart (netzparallel od. Inselbetrieb) zu treffen.

Es sei darauf hingewiesen, dass sich die Erfindung besonders vorteilhaft mit KWK- oder KWK(K)-Einheiten kombinieren lässt, die beispielsweise durch Blockheizkraftwerke o. dgl. gebildet sein können. Dies ist jedoch keinesfalls einschränkend zu verstehen, da auch andere Energiewandlungseinrichtungen in Kraft-Wärme-Koppelung betrieben werden können, so bspw. Brennstoffzellen, Dampfkolbengeneratoren oder ähnliche Einheiten.

Vorzugsweise sind alle Erzeuger, Verbraucher, Speicher über eine zentrale Steuereinheit gekoppelt, die relevante Betriebsparameter erfasst, verarbeitet und aufbereitet, speichert und/oder an eine Anzeige- und Eingabeeinheit liefert. Die Anzeige- und/oder Eingabeeinheit kann insbesondere Teil einer Steuerungszentrale und mit dieser unmittelbar oder über eine Funk- und/oder Leitungsverbindung über eine Entfernung gekoppelt sein. Das Anzeigegerät kann wahlweise eine Funkverbindung oder eine Kabelverbindung oder auch eine entfernte Verbindung (z.B. Internet, Mobilfunknetz etc.) zu der Steuereinheit aufweisen, um dem Benutzer an jedem Ort zu ermöglichen, die Daten der Anlage auszuwerten und ihre Betriebsparameter zu überprüfen, zu beeinflussen oder in gewünschter Weise zu verändern, um bspw. eine Anpassung oder Neukonfiguration vorzunehmen.

Eine besonders vorteilhafte weitere Konfiguration kann eine Anordnung mehrerer bzw. einer Vielzahl von miteinander über ein öffentliches und/oder privates Leitungsnetz gekoppelter Systeme gemäß einer der zuvor beschriebenen Ausführungsvarianten vorsehen, die mit einer zentralen Steuerungszentrale kommunizieren und bei einer erhöhten Nachfrage nach elektrischer Energie so konfigurierbar sind, dass einzelne, mehrere oder alle der miteinander gekoppelten Systeme zur Lieferung elektrischer Energie an das öffentliche Netz herangezogen werden. Auf diese Weise können je nach Strombedarf einzelne, mehrere oder alle der miteinander gekoppelten Systeme zur Lieferung elektrischer Energie an das öffentliche Netz herangezogen werden und damit ein virtuelles Kraftwerk bilden oder Teil eines virtuellen Kraftwerkes sind. Hierzu ist jeweils eine Schnittstelle der Einheiten zur Vernetzung mit der Zentrale eines virtuellen Kraftwerks oder eines öffentlichen Leitungsnetzes vorgesehen, so dass das erfindungsgemäße System bzw. die erfindungsgemäßen Systeme und/oder Einheiten Teil eines virtuellen Kraftwerks ist/sind. Wird in der Zentrale ein erhöhter Strombedarf ermittelt, so werden alle angeschlossenen Systeme kontaktiert, die der Zentrale mitteilen, über welchen Zeitraum und welche Menge an elektrischer Energie dem virtuellen Kraftwerk zur Verfügung gestellt werden kann. Sind die Pufferspeicher eines der erfindungsgemäßen Systeme für Wärme und Kälte voll oder wird aktuell keine Wärme oder Kälte benötigt, teilt das jeweilige System das Ende der Stromproduktion mit. Alternativ kann auch eine Vorrichtung zum System gehören, die es ermöglicht die anfallende Wärme an die Umgebungsluft abzugeben. Dies soll aber nur in Ausnahmefällen geschehen, da diese Art des Betriebes eine Verschwendung von Energie darstellt. Gleichzeitig kann ein anderes System mit der Stromproduktion beginnen, so dass auf diese Weise die Gesamtleistung des virtuellen Kraftwerks konstant gehalten werden kann. Je nach Größe und Füllstand des Strompuffers innerhalb der einzelnen Systeme kann dem virtuellen Kraftwerk auch Solar- oder Windstrom zur Verfügung gestellt werden. Der Strompuffer dient dabei zum Ausgleich von Schwankungen in der Stromproduktion von Wind- und Solaranlagen.

Eine Variante einer solchen Vernetzung kann auch als "Smart Grid" bezeichnet werden. Während bis zur heutigen Zeit meist regionale Stromanbieter die Netzversorgung sicherstellen, sind moderner strukturierte Stromnetze überregional oder sogar länderübergreifend vernetzt. Der gleichzeitig zu erkennende Trend zu einer weniger zentral organisierten Stromerzeugung durch zahlreiche Kleinkraftwerke ― oftmals auch durch Nutzung regenerativer Energieformen ― führt gleichzeitig zu einer stark erhöhten Komlexizität der Netzstrukturen. Das sog. "Smart Grid" bezeichnet die umfassende Organisation solcher Stromnetze zur Steuerung, (Lasten-)Verteilung, Speicherung und Erzeugung von elektrischer Energie. Mittels eines sog. Grid Asset Management können Informationen über die zur Verfügung stehenden Ressourcen und Abnehmer bereitgestellt werden. Es können auf diese Weise Versorgungsengpässe, Qualitätsmängel und Wertschöpfungspotenziale als auch Kostenfaktoren erkannt und optimiert werden. Ein wesentlicher Aspekt solcher intelligenten Netze liegt bspw. in der Möglichkeit der Energieversorger, einen Stromverbrauch der Endkunden zu prognostizieren und/oder zu erfassen, ohne dass hierzu noch herkömmliche Stromzähler vonnöten wären.

Auch die Nutzung sog. intelligenter Stromzähler mittels eines sog. "Smart Metering" kann ganz wesentlich zur sinnvollen Umsetzung der Erfindung beitragen. Ein intelligenter Zähler (auch Smart Meter genannt) ist ein elektronischer Stromzähler, mit dem es über eingebaute Zusatzfunktionen oder nachträgliche Module möglich ist, die erfassten Zählerstände vom Energieversorgungsunternehmen über die Ferne auszulesen. Zur Datenfernübertragung stehen bspw. die Möglichkeiten von GPRS, GSM, LAN , WLAN oder Stromleitung zur Verfügung.

Bei allen diesen erwähnten Kombinationsvarianten der Koppelung der Einheiten mit privaten und/oder öffentlichen Netzen sowie bei der Nutzung der Einheiten selbst ist immer auch die Alternative des öffentlichen Strombezugs zu berücksichtigen. So sind vorzugsweise im erfindungsgemäßen Energiemanagementsystem alle verfügbaren Strompreise und deren variable oder feste Parameter (Hochtarif, Niedertarif, verschiedene Anbieter etc.) hinterlegt, sowohl was den Strombezug als auch die Einspeisevergütung betrifft. Auf diese Weise kann der Betrieb der Anlage bzw. das Verfahren sehr kosteneffizient gesteuert werden, wenn bspw. gekaufter Strom zu bestimmten Zeitpunkten kostengünstiger ist als Solarstrom inklusive des damit erzielbaren Zuschusses oder wenn der Kunde das Energiemanagementsystem ohne Berücksichtigung erneuerbarer Energien betreiben will.

Wenn im vorliegenden Zusammenhang von "Einheiten" die Rede ist, so sind damit weitgehend alle denkbaren Varianten von dezentralen oder virtuellen Erzeugungs- oder Verbrauchseinheiten umfasst. Das erfindungsgemäße System kann ganz individuell nach Kundenwunsch konfiguriert werden. So ist die Anzahl der verwendeten bzw. angeschlossenen Energieerzeuger und -verbraucher grundsätzlich frei wählbar. Für einen reibungslosen Betrieb sollten alle Energieerzeuger und mindestens alle wichtigen Energieverbraucher erfasst werden. Auf der Erzeugerseite besteht eine Basiskonfiguration zumindest aus einer KWK- bzw. KWK(K)-Einheit bzw. einem Blockheizkraftwerk für die Versorgung mit Strom und Wärme. Darüber hinaus können weitere Erzeuger wie z.B. Fotovoltaikanlagen, Thermosolaranlagen, Wärmepumpe, Windkraftanlage etc. an die Steuereinheit des Systems angekoppelt werden. Auf der Verbraucherseite können je nach Bedarf oder Kundenwunsch bis zu 100% aller Verbraucher angeschlossen und erfasst werden.

Das erfindungsgemäße Energiemanagementsystem bzw. das entsprechende Verfahren ist allgemeingültig zu verstehen und keinesfalls auf die Anwendung bzw. Koppelung von Haushaltseinheiten und/oder gewerblichen Wirtschaftseinheiten beschränkt. Diese Einheiten können zwar zur Verdeutlichung der erfindungswesentlichen Aspekte dienen, doch lassen sich grundsätzlich alle Größenordnungen von Energieerzeugungs-, Energiespeicher- und/oder Energieverbrauchereinheiten auf eine der beschriebenen Arten miteinander verschalten und koppeln, bspw. auch auf Kraftwerksebene oder in mobilen Bereichen, bspw. auf Schiffen oder in Kolonien, die in lebensfeindlichen Gebieten eingerichtet sind und auf eine weitgehend autarke Energieversorgung angewiesen sind.

Die Erfindung wird nachfolgend anhand eines bevorzugten Ausführungsbeispiels unter Bezugnahme auf die beiliegenden Zeichnungen näher erläutert.
Fig. 1 zeigt eine schematische Blockdiagramm-Darstellung einer Ausführungsvariante eines erfindungsgemäßen Systems.
Fig. 2 zeigt anhand eines weiteren Blockdiagramms die wesentlichen Bestandteile eines Batteriemanagementsystems.

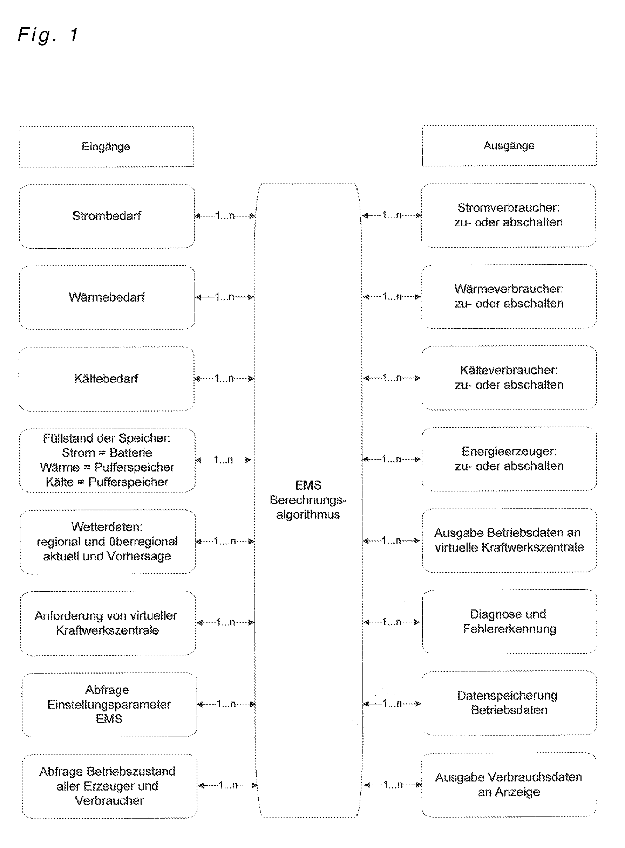

Die Fig. 1 zeigt eine schematische Blockdiagramm-Darstellung einer Ausführungsvariante eines erfindungsgemäßen Energiemanagementsystems. Ein zentraler Bestandteil des dargestellten Energiemanagementsystems (EMS) ist die zentrale Steuereinheit, in der ein Berechnungsalgorithmus für eine sinnvoll und möglichst energieeffiziente und/oder bedarfsgerechte Verknüpfung der zur Verfügung stehenden Energieerzeuger sowie der existierenden Verbraucher sorgt. Der Bedarf an den unterschiedlichen Energiearten wird in diesem Zusammenhang als "Eingänge" bezeichnet, während die "Ausgänge" die unterschiedlichen Betriebsarten und die Lieferung von Informationsdaten und Betriebsparametern kennzeichnen.

Es kann bspw. ein aktueller Strombedarf, ein aktueller Wärmebedarf sowie ein aktueller Kältebedarf ermittelt und in der EMS erfasst werden. Darüber hinaus können wahlweise Füllstände der Speicher, Wetterdaten und weitere externe Daten erfasst werden. Auch eine Anforderung einer externen virtuellen Kraftwerkszentrale kann berücksichtigt werden. Der Benutzer kann über eine Schnittstelle und/oder Anzeigeeinrichtung auf Einstellungsparameter der EMS zugreifen bzw. diese abfragen, ebenso wie aktuelle Betriebszustände aller Energieerzeuger und Energieverbraucher.

Auf der Ausgangsseite können alle Arten von angeschlossenen Verbraucher (Strom, Wärme, Kälte) und Energieerzeuger zu- und abgeschaltet werden. Alle relevanten Betriebsparameter und Zustandsdaten können visualisiert, gespeichert, einer externen Stelle oder dem Benutzer auf beliebige Weise zur Verfügung gestellt werden. So können die Betriebsdaten bspw. an die virtuelle Kraftwerkszentrale geliefert werden, um dieser eine gezielte Ansteuerung der EMS und damit des Energieerzeugungssystems zu ermöglichen.

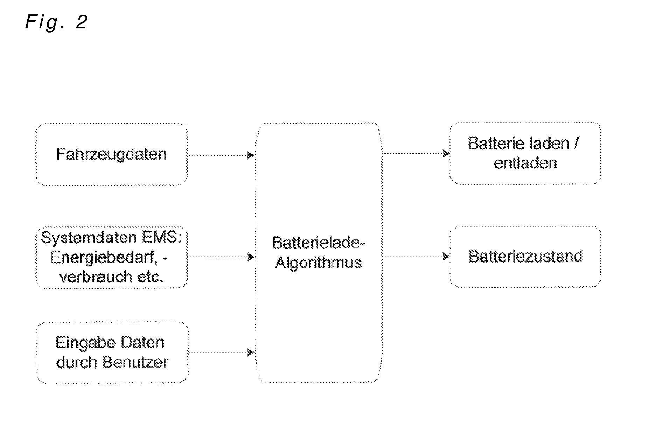

Die schematische Darstellung der Fig. 2 zeigt anhand eines weiteren Blockdiagramms die wesentlichen Bestandteile eines Batteriemanagementsystems. So lassen sich Batterien als elektrische Energiespeichereinheiten in das EMS integrieren. Die gezeigte Darstellung bezieht sich auf die Variante eines elektrisch betriebenen Kraftfahrzeugs, dessen Akkumulatoren durch ein geeignetes Management auf optimierte Weise betrieben und/oder in das oben beschriebene EMS integriert werden. So können die Batterien des Kraftfahrzeugs über das bereits installierte EMS (Energiemanagementsystem) aufgeladen und diesem bei Bedarf als ergänzende Energiequelle zur Verfügung gestellt werden. Dies senkt den Energiebedarf und kann die Gesamtkosten des Systems bzw. dessen Betriebs reduzieren. Gleichzeitig kann durch entsprechend ausgelegte und optimierte Ladezyklen die Batterielebensdauer verlängert werden und/oder die Batteriekapazität über einen längeren Zeitraum aufrechterhalten werden. Zu diesem Zweck wird die Batterie bzw. das Fahrzeug an das EMS angeschlossen. Das EMS erfasst den Batteriezustand eigenständig und zyklisch oder permanent und entscheidet anhand vorgegebener Algorithmen, welcher Ladezyklus notwendig bzw. aus Optimierungsgründen aktuell am sinnvollsten ist. Diese Beurteilung kann auch vom Benutzer vorgegeben bzw. zumindest beeinflusst werden, wenn beispielsweise die Batterie aufgefrischt werden soll, was gewöhnlich mehrere Stunden dauert.

Um sicherzustellen, dass bei Verwendung von Fahrzeugbatterien für mindestens den nächsten Fahrzyklus noch ausreichend Energie in der Batterie verbleibt, werden auch die Fahrzeugdaten in das EMS eingelesen und/oder durch den Benutzer vorgegeben. So kann der Batterielade- und -entladezyklus individuell vom EMS auf das Benutzerverhalten angepasst werden. In Abhängigkeit von den erhaltenen Daten entscheidet dann das EMS, welcher Ladezyklus für die Batterie unter den gegebenen Randbedingungen sinnvoll ist und gewählt wird. Die Fahrzeugdaten werden entweder von der vom Fahrzeughersteller eingebauten Steuerung ausgelesen oder es wird eine zusätzliche autarke Steuerung vom EMS im Kundenfahrzeug eingebaut, um das Benutzerverhalten bei Fahrten mit dem Fahrzeug zu erhalten. Benötigt werden beispielsweise Dauer und Länge der letzten Fahrzyklen, ein durchschnittlicher, minimaler und maximaler Energieverbrauch sowie typische Standzeiten des Fahrzeugs.

Ist jede Batterie oder jedes Fahrzeug mit einer einmaligen Kennzeichnung (z.B. Barcode oder Seriennummer) ausgestattet und wird diese mit in das EMS eingelesen, speichert das EMS über einen konfigurierbaren Zeitraum die Daten der Batterie bzw. des Fahrzeugs. Dies ermöglicht die Auswertung über das Langzeitverhalten, die Verbesserung des Lade-/Entladealgorithmus und reduziert die Kosten für Reparatur und Wartung.

Auch kann das EMS verwendet werden, um das Fahrzeug und andere angeschlossene Geräte und Maschinen zu überwachen. Zusätzlich kann das EMS die Werkstatt oder den Handwerker über fällige Wartungstermine und über den Zustand des Fahrzeugs und/oder des Gerätes etc. informieren. So können schon vor dem Wartungstermin Ersatzteile bestellt oder die zeitliche Dauer des Werkstattaufenhaltes bzw. der Wartung ermittelt und eingeplant werden. Die erhöht die Kundenzufriedenheit, senkt Kosten und lastet die Werkstatt bzw. den Handwerker besser aus.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Verfahren zur gemeinsamen und/oder aufeinander abgestimmten Steuerung miteinander gekoppelter Energieerzeugungs-, Speicher- und/oder Verbrauchseinheiten, bei dem wenigstens eine Energieerzeugungseinheit mit wenigstens einer Verbrauchseinheit derart gekoppelt ist, dass die von dieser benötigte Energie mittels eines Regel- und/oder Prognosealgorithmus zumindest näherungsweise auf Grundlage eines Verbrauchsprofils in der Vergangenheit über den Zeitverlauf und/oder auf Grundlage weiterer Parameter wie z.B. Wetterdaten in der Vergangenheit, Gegenwart oder Zukunft abgeschätzt und von der Energieerzeugungseinheit zur Verfügung gestellt wird, wobei gleichzeitig eine Versorgung mit Strom, Wärme und/oder Kälte mit einem Minimum an insgesamt zugeführter Energie und unter Berücksichtigung von Nutzervorgaben sichergestellt wird.

2. Verfahren nach Anspruch 1, bei dem eine zu bestimmten Zeitpunkten benötigte und nicht von der Energieerzeugungseinheit zur Verfügung stellbare Mehrkapazität von einer mit den Einheiten gekoppelten Speichereinheit geliefert wird, die eine Pufferkapazität zur Verfügung stellt.

3. Verfahren nach Anspruch 1 oder 2, bei dem die Speichereinheit oder zumindest eine von mehreren Speichereinheiten durch mindestens eine Akkumulatoreinheit und/oder mindestens eines temporär mit der Energieerzeugungseinheit gekoppeltes, elektrisch betriebenes Fahrzeug, z.B. Kraftfahrzeug, Flurförderfahrzeug, Fahrrad etc. gebildet wird.

4. Verfahren nach einem der Ansprüche 1 bis 3, bei dem eine zu bestimmten Zeitpunkten benötigte und nicht von der Energieerzeugungseinheit zur Verfügung stellbare Mehrkapazität von einem mit den Einheiten gekoppelten öffentlichen und/oder privaten Leitungsnetz zur elektrischen Energieversorgung und/oder zur Wärme- und/oder Kälteversorgung geliefert wird und/oder wobei eine zu bestimmten Zeitpunkten von den Energieerzeugungseinheiten gelieferte und verfügbare und gleichzeitig nicht von den Verbrauchseinheiten benötigte und/oder nicht von wenigstens einer Speichereinheit aufnehmbaren Wärmeenergie benachbarten Verbrauchseinheiten zur Verfügung gestellt wird.

5. Verfahren nach einem der Ansprüche 1 bis 4, bei dem die Prognosedaten zur Bildung des Regelalgorithmus aus Verläufen der Erzeuger- und/oder Verbrauchereinheiten, aus Nutzungsverläufen und/oder Ladungszuständen der mit den Einheiten koppelbaren Fahrzeugen bzw. Kraftfahrzeugen sowie aus Wetterdaten und/oder Einstellparametern gebildet werden, wobei die die Wetterdaten unterstützend zur Vorhersage und Planung von geschätzten und/oder zu erwartenden Erzeugungs- und/oder Verbrauchsverläufen der Einheiten nutzbar bzw. verarbeitbar sind.

6. Verfahren nach einem der Ansprüche 1 bis 5, bei dem eine zu bestimmten Zeitpunkten von den Energieerzeugungseinheiten gelieferte und verfügbare und gleichzeitig nicht von den Verbrauchseinheiten benötigte und/oder nicht von der wenigstens einen Speichereinheit aufnehmbare elektrische Energie dem öffentlichen und/oder privaten Leitungsnetz und/oder benachbarten Verbrauchseinheiten zur Verfügung gestellt wird.

7. Verfahren nach einem der Ansprüche 1 bis 6, bei dem die wenigstens eine Energieerzeugungseinheit für Strom oder Wärme und/oder Kälte eingesetzt wird, die bedarfs- und/oder situationsabhängig netzparallel oder in einem Inselbetrieb betrieben wird.

8. Verfahren nach einem der Ansprüche 1 bis 7, bei dem von einem Inselbetrieb als bevorzugter Betriebsweise bei Auswertung definierbarer Randbedingungen wie einem Speichervorrat an gespeicherter elektrischer Energie, Wärme und/oder Kälte sowie ggf. unter Berücksichtigung eines Verbrauchsprofils in der Vergangenheit und/oder weiterer Parameter wie z.B. Wetterdaten in der Vergangenheit, Gegenwart oder Zukunft auf einen netzparallelen Betrieb umgeschaltet wird.

9. Verfahren nach Anspruch 8, bei dem die Auswertung des Systemzustandes und/oder der Randbedingungen zur kurz- oder mittelfristigen Prognose verwendet werden, um eine Entscheidung über die Betriebsart zu treffen.

10. Verfahren nach einem der Ansprüche 1 bis 9, bei dem alle Erzeuger, Verbraucher, Speicher über eine zentrale Steuereinheit gekoppelt sind, die relevante Betriebsparameter erfasst, verarbeitet und aufbereitet, speichert und/oder an eine Anzeige- und/oder Ein- bzw. Ausgabeeinheit liefert, wobei die Anzeige- und/oder Eingabeeinheit Teil einer Steuerungszentrale und mit dieser unmittelbar oder über eine Funk- und/oder Leitungsverbindung über eine Entfernung gekoppelt ist.

11. Verfahren nach einem der Ansprüche 7 bis 10, bei dem das Verhältnis von erzeugter Wärme und erzeugtem Strom, insbesondere bei einer KWK-Energieerzeugungseinheit, nach Bedarf verändert wird.

12. System zur gemeinsamen und/oder aufeinander abgestimmten Steuerung miteinander gekoppelter Energieerzeugungs-, Speicher- und/oder Verbrauchseinheiten, bei dem wenigstens eine Energieerzeugungseinheit mit wenigstens einer Verbrauchseinheit derart gekoppelt ist, dass die von dieser benötigte Energie mittels eines Prognosealgorithmus zumindest näherungsweise auf Grundlage eines Verbrauchsprofils in der Vergangenheit über den Zeitverlauf abschätzbar und von der wenigstens einen Energieerzeugungseinheit zur Verfügung stellbar ist.

13. System nach Anspruch 12, bei dem die Energieerzeugungseinheiten sowie die Verbrauchseinheiten mit einem öffentlichen und/oder privaten Leitungsnetz zur elektrischen Energieversorgung und/oder zur Wärme- und/oder Kälteversorgung gekoppelt sind.

14. Anordnung mehrerer bzw. einer Vielzahl von miteinander über ein öffentliches Leitungsnetz gekoppelter Systeme gemäß Anspruch 12 oder 13 , die mit einer Steuerzentrale eines Kraftwerkes oder einer vergleichbaren technischen Einrichtung kommunizieren und bei einer erhöhten Nachfrage nach Energie so konfigurierbar sind, dass einzelne, mehrere oder alle der miteinander gekoppelten Systeme zur Lieferung von Energie an das öffentliche und/oder private Leitungsnetz herangezogen werden.

15. Verfahren zur Steuerung der Anordnung gemäß Anspruch 14, bei dem alle miteinander gekoppelten Systeme mit einer Steuerungszentrale eines Kraftwerks oder einer vergleichbaren technischen Einrichtung kommunizieren und bei einer erhöhten öffentlichen Nachfrage nach Energie so konfiguriert werden, dass je nach Energiebedarf einzelne, mehrere oder alle der miteinander gekoppelten Systeme zur Lieferung von Energie an das öffentliche und/oder private Netz herangezogen werden.
